Europäisches Patentamt

European Patent Office

Office européen des brevets

(19)

(11) **EP 0 883 925 B1**

(12) **EUROPÄISCHE PATENTSCHRIFT**

(45) Veröffentlichungstag und Bekanntmachung des Hinweises auf die Patenterteilung:
**23.01.2002  Patentblatt 2002/04**

(51) Int Cl.⁷: **H02K 7/02**, H02K 7/09, F16C 39/06

(21) Anmeldenummer: **97905093.7**

(22) Anmeldetag: **26.02.1997**

(86) Internationale Anmeldenummer:
**PCT/EP97/00924**

(87) Internationale Veröffentlichungsnummer:
**WO 97/32386 (04.09.1997 Gazette 1997/38)**

(54) **SCHWUNGRAD-ENERGIESPEICHER**

FLYWHEEL ENERGY ACCUMULATOR

ACCUMULATEUR D'ENERGIE A VOLANTS D'INERTIE

(84) Benannte Vertragsstaaten:
**DE FR GB IT**

(30) Priorität: **02.03.1996  DE 19608099**

(43) Veröffentlichungstag der Anmeldung:
**16.12.1998  Patentblatt 1998/51**

(73) Patentinhaber: **Forschungszentrum Karlsruhe GmbH**
**76133 Karlsruhe (DE)**

(72) Erfinder:
  • **BORNEMANN, Hans**
    **D-75365 Calw (DE)**
  • **MAAS, Christian**
    **D-25524 Itzehoe (DE)**
  • **WEBER, Klaus**
    **D-76297 Stutensee (DE)**
  • **RIETSCHEL, Hermann**
    **D-76694 Forst (DE)**
  • **GUTT, Hans-Joachim**
    **D-70597 Stuttgart (DE)**

(74) Vertreter: **Rückert, Friedrich, Dr.**
**Forschungszentrum Karlsruhe GmbH Patente und Lizenzen Weberstrasse 5**
**76133 Karlsruhe (DE)**

(56) Entgegenhaltungen:
**EP-A- 0 526 903      WO-A-95/07193**
**FR-A- 2 565 310      US-A- 4 385 251**
**US-A- 5 270 601**

  • **KFK-NACHRICHTEN 26, Bd. 3/94, Seiten 209-214, XP000672400 BORNEMANN H.J ET AL: "Schwungradenergiespeicher mit passiven supraleitenden magnetischen Lagern"**
  • **APPLIED SUPERCONDUCTIVITY, Bd. 2, Nr. 7/08, 1.Juli 1994, Seiten 439-447, XP000498903 BORNEMANN H J ET AL: "LOW FRICTION IN A FLYWHEEL SYSTEM WITH PASSIVE SUPERCONDUCTING MAGNETIC BEARINGS"**
  • **IEEE TRANSACTIONS ON MAGNETICS, Bd. 32, Nr. 4, Juli 1996, Seiten 2578-2581, XP002031465 TIXADOR P ET AL: "Hybrid superconducting magnetic suspensions"**

**Beschreibung**

Die vorliegende Erfindung betrifft einen Schwungrad-Energiespeicher mit den Merkmalen des Oberbegriffs des Anspruchs 1.

Schwungradspeicher mit konventionellen Lagern besitzen vor allem auf Grund der hohen Lagerreibung und des dadurch bedingten Verschleisses nur ein geringes Speicherpotential. Bei berührungsfreien, aktiven Magnetlagern muß einerseits eine aufwendige Meß- und Regelelektronik bereitgestellt werden und andererseits muß die in der Regel unzureichende Dämpfung durch den Einbau zusätzlicher Wirbelstromdämpfer ausgeglichen werden. Ein weiterer Nachteil ist die mit der Drehzahl stark ansteigende Steifigkeit des Lagers. Weil sie diese Nachteile nicht aufweisen, sind supraleitende magnetische Lager besonders für Schwungradenergiespeicher zur verlustarmen Speicherung von elektrischer Energie geeignet. Da die Lager ohne jegliche Regelung auskommen, werden sie als selbststabilisierende oder passive Lager bezeichnet. Bei Schwungradspeichern wird elektrische Energie in einer Motor-/Generator-Einheit in kinetische Energie umgewandelt und in einer hochfesten Schwungradscheibe gespeichert. Wichtig ist dabei die Minimierung der Verluste in der Speicherphase, um die Selbstentladung zu verhindern. Dazu ist der Rotor des Systemes berührungsfrei auf den erwähnten, supraleitenden Magneten gelagert. Ein solches System ist z.B. bekannt aus: Bornemann H.J. et al.: "Schwungradenergiespeicher mit passiven supraleitenden magnetischen Lagern", KFK-Nachrichten 26, Heft 3/94, Seiten 209-214.

Weiterhin ist aus der EP 0 526 903 A1 ein supraleitendes Doppellager für eine vertikale Welle bekannt, bei welchem der Antriebsmotor der Welle zwischen den beiden Lagern angeordnet ist und koaxial auf der Welle sitzt. Eine Kombination mit einem oder mehreren Schwungrädern zur Energiespeicherung ist dabei jedoch nicht vorgesehen.

Aufgabe der vorliegenden Erfindung ist es nun, einen solchen Schwungradenergiespeicher weiter zu verbessern, indem einerseits die Verluste verringert und andererseits die Speicherkapazität der Anlage vergrößert werden.

Zur Lösung der Aufgabe schlägt die Erfindung bei einem Schwungrad-Energiespeicher der eingangs erwähnten Art vor, daß a) der Energiespeicher aus zwei, durch eine Homopolarmaschine angetriebenen Schwungrädern, einem unteren und einem oberen besteht, die in Abstand zueinander gemeinsam auf der Welle des Rotors der Homopolarmaschine sitzen, wobei dieser auf der Welle zwischen den beiden Schwungrädern innerhalb des Stators angeordnet ist, daß b) auf der Welle unter dem unteren Schwungrad der Ringmagnet eines ersten, unteren supraleitenden passiven Axiallagers als Drucklager, über dem oberen der Ringmagnet eines zweiten, oberen supraleitenden passiven Axiallagers als Zuglager gegen die Schwerkraft sitzt, wobei d) der Stator der Homopolarmaschine am Gehäuse angebracht oder als Teil des Gehäuses ausgebildet ist.

Weitere vorteilhafte Merkmale zur Lösung der Aufgabe sind in den kennzeichnenden Teilen der Unteransprüche angeführt.

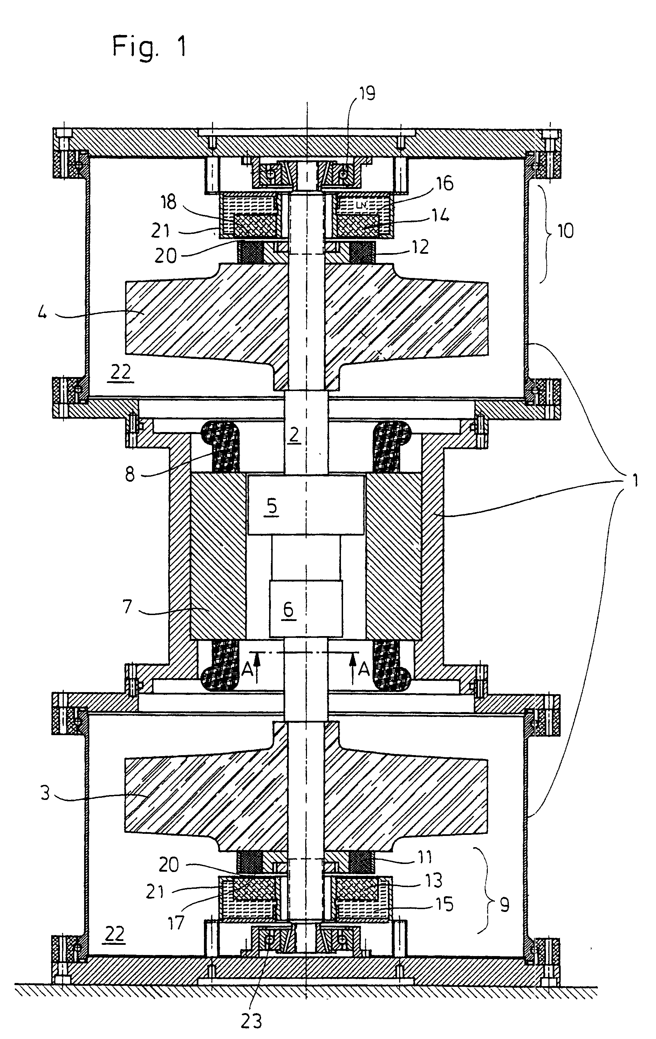

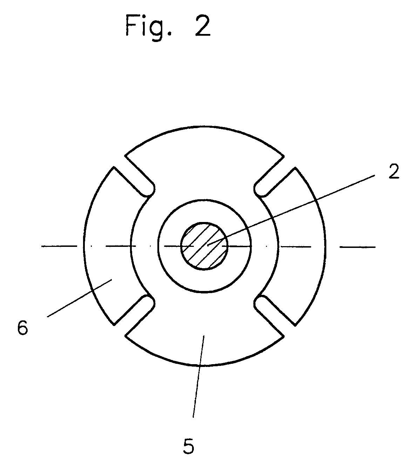

Einzelheiten des Schwungrad-Energiespeichers werden im folgenden und anhand der Figuren 1 und 2 näher erläutert. Es zeigen:

Die Fig. 1 einen Längsschnitt des Energiespeichers und
die Fig. 2 einen Schnitt entlang AA in der Fig. 1.

Schwungradenergiespeicher der eingangs erwähnten Art bestehen im allgemeinen aus folgenden Komponenten: Einer Schwungradscheibe, supraleitenden, magnetischen Lagern, einer Antriebseinheit - normalerweise einem Synchronmotor-, einem Vakuumgehäuse mit Vakuumsystem zur Aufnahme der Komponenten sowie den zugehörigen Pumpen und Sensoren. Bei der hier vorliegenden Konzeption dient im Gegensatz zu dem Stand der Technik eine Homopolarmaschine als Antriebseinheit.

Bei der in der Fig. 1 dargestellten Ausführung des Schwungrad-Energiespeichers ist die gesamte Vorrichtung in einem geschlossenen Vakuumgehäuse 1 in dem Vakuumraum 22 untergebracht. Rein aus kryotechnischen Gründen würde es jedoch, z. B. zur Verhinderung des Vereisens, genügen, nur die supraleitenden Lager selbst jeweils durch eine kleinere Vakuumkammer zu isolieren. Aus Gründen verminderter Reibung ist es jedoch zweckmäßiger, auch das Schwungrad mitsamt der Welle in einem Vakuumgehäuse anzuordnen.

Hauptelement des Energiespeichers ist die senkrechte, drehbare Welle 2, auf welcher in Abstand zueinander zwei Schwungräder, ein unteres 3 sowie ein oberes 4 angebracht sind, wobei die Welle 2 durch die Schwungräder hindurchgeht. Dies für den Fall, daß die Schwungräder 3 und 4 aus einem anderen Material bestehen als die Welle 2. Die Schwungräder können in ihrer Form und ihren Abmessungen gleich sein, besonders zweckmäßig ist es, wenn sie gleiche Gewichte aufweisen und symmetrisch zueinander angeordnet sind. Zwischen den Schwungrädern 3 und 4 sitzt der Rotor einer Innenläufer-Homopolarmaschine als Elektromotor und Generator, der aus den zwei um 90° gegeneinander versetzten Polelementen 5 und 6 besteht. Die beiden Polelemente 5 und 6 weisen eine geringere Breite als Höhe auf und sind in bestimmtem Abstand symmetrisch zueinander angeordnet (siehe die Fig. 2).

Um die Polelemente 5 und 6 des Rotors als Teil der Welle 2 ist der Stator 7 der Homopolarmaschine ortsfest im Gehäuse 1 oder als Teil des Gehäuses 1 angeordnet. Die Wicklungen 8 des Stators 7 erzeugen ein im Stator rotierendes magnetisches Feld, welches die Welle 2, auf die Polelemente 5 und 6 einwirkend, in Rotation versetzt. Auf diese Weise wird die eingebrachte elektrische Energie in Rotationsenergie der Schwungräder 3 und 4 umgewandelt.

Wesentliche Elemente des Schwungrad-Energiespeichers sind die beiden, vorzugsweise gleich aufgebauten supraleitenden Axiallager, das erste untere 9 und das zweite obere 10. Beide Lager 9 und 10 bestehen aus je einem ringförmigen mit der Welle 2 mitdrehenden Permanentmagnet 11 und 12, je einem zum Gehäuse 1 festen Supraleiter 13 und 14 in je einem Kryostaten 15 und 16. Die Supraleiter 13 und 14 sind ringförmig ausgebildet wie die Permanentmagnete 11 und 12 und sind seitlich so in die Kryostaten 15 und 16 eingebettet, daß eine ihrer Außenseiten 17 und 18 gegenüber den Permanentmagneten 11 und 12 gelegen ist und sind auf der Welle 2 unter dem unteren Schwungrad 3 und über dem oberen 4 an diesen so angeordnet, daß zwischen ihrer Außenfläche und den Außenseiten 17 und 18 der Kryostaten 15 und 16 ein enger Spalt 20 bleibt. Dieser Spalt 20 ist auch bei Stillstand der Maschine vorhanden. Damit liegt auf der den Schwungrädern 3 und 4 abgewandten Seite jeweils ein mit diesen drehbarer Magnet 11 und 12 in Abstand zu jeweils einem Supraleiter 15 und 16, der gegenüber dem Gehäuse 1 fest ist. Es werden somit ein supraleitendes unteres passives Axiallagers 9 als Drucklager und entsprechend ein oberes 10 als Zuglager gegen die Schwerkraft gebildet.

Radiale Lager sind bei dem Schwungrad-Energiespeicher nicht mehr vorhanden, da die supraleitenden Axiallager 9,11 und 10,12 auch radiale Kräfte oder Steifigkeiten aufbringen. Trotzdem müssen aus Stabilitätsgründen für die radiale Stabilisierung bestimmte Vorkehrungen getroffen werden. Zur Minimalisierung der Instabilitäten beim Betrieb sollte deswegen das polare Trägheitsmoment $I_{pol}$ vom äquatorialen Trägheitsmoment $I_{äqu}$ der rotierenden Teile Schwungräder 3,4, Welle 2 und Polelemente 5,6 möglichst verschieden sein. Dazu hat sich ein Faktor zwei als günstig herausgestellt. Das heisst, das rotierende Element ist entweder flach und ausgedehnt oder langgestreckt. Für den vorliegenden Fall mit einem Rotor aus zwei Schwungrädern 3,4 und den dazwischen liegenden Polelementen 5,6 und der Welle bedeutet das:

$$L >= {}^{1}3 * R$$

wobei L der Abstand der Massenmittelpunkte der zwei Schwungräder voneinander und R der Radius der Schwungräder ist.

Die Kryostaten 15 und 16 werden auf nicht näher dargestellte Weise betrieben, besitzen ein Hülle 21 und sind durch den Vakuumraum 22 im Gehäuse 1 nach außen thermisch isoliert. Die Kühlung der supraleitenden Lager 9 und 10 wird entweder mit flüssigem Stickstoff im Durchfluß oder durch direkten Kontakt mit einem von einem Sterlingkühler gekühlten Kaltfinger bereitgestellt. Die Versorgung der Kühlaggregate kann dabei direkt aus dem Schwungrad erfolgen.

Zusätzlich zu den supraleitenden Lagern 9 und 10 sind jeweils am oberen und unteren Ende der Welle 2 Axialrillenkugellager 19 und 23 vorgesehen, welche bei einem Ausfall der supraleitenden Lager 9 und 10 das Gewicht der Welle 2 mit den Schwungrädern und dem Rotor aufnehmen. Diese Lager 19 und 23 sind jedoch im Speicherbetrieb außer Funktion, d. h. ihre Lagerreibung beeinträchtigt das Speichervermögen nicht.

Durch die symmetrische Anordnung der Schwungräder 3 und 4 bezüglich der Maschine 5, 6, 7 werden besonders kompakte Abmessungen des Gesamtsystemes der Maschine und eine gleichmäßige Belastung der beiden an den Wellenenden befindlichen Lager 9 und 10 erreicht. Antriebsmaschine und Schwungrad sind hier zwar baulich integriert, können jedoch auch unabhägig voneinander in ihren Abmessungen variiert werden, so daß eine flexible Abstimmung auf unterschiedliche Betriebsanforderungen, wie z. B. hohes Speichervermögen und kleine Maschine oder mittleres Speichervermögen und große Maschine mit hoher Kurzzeitüberlastbarkeit möglich ist. Die Anpassungsfähigkeit bedeutet natürlich auch die Fähigkeit, größere Anlagen günstig aus Modulen zusammenzusetzen. Bei diesem System mit der Verwendung gleicher Schwungmassen für die beiden Schwungräder 3 und 4 sowie der Möglichkeit gleiche Magnetlager 9 und 10 aus jeweils einstückigen Supraleitern und Magneten verwenden zu können, kann die Zahl unterschiedlicher Bauteile verringert werden. Diese Möglichkeit bringt insbesondere im Hinblick auf die Verarbeitung supraleitenden Materiales große Vorteile, da geteilte Supraleiter und Magnete "Streufelder" an den Nahtstellen aufweisen die zu erheblichen Reibungsverlusten durch magnetische Hystereseverluste im drehenden System führen.

Die elektrische Maschine, der Motor/Generator 5, 6, 7 ist in der Speicherphase, d. h. bei dann rotierenden Schwungrädern abgeregt, um Wirbelstromverluste zu vermeiden. Durch den Betrieb im Vakuum sind Luftreibungsverluste praktisch nicht vorhanden. Der Betrieb des Systemes bei sehr hohen Drehzahlen ist für eine hohe Effizienz der Anlage wichtig, da es ein günstiges Leistungs- und Energiegewicht bei gleichzeitiger optimaler Ausnutzung des Schwungscheibenmateriales ermöglicht. Im Vergleich zu einem System gleicher Speicherkapazität bei niedrigeren Drehzahlen kann hier mit geringeren Schwungmassen gearbeitet werden. Dadurch können die Magnetlager kleiner gebaut werden. Die Größe des Magnetlagers hat starken Einfluß auf die magnetischen Reibungsverluste. Um größere Massen levitieren zu können, muß das Magnetlager entsprechend größer sein. Entscheidend dafür ist die aktive Fläche des Magnetmateriales und des Supraleitermateriales. Für ein Rotorgesamtgewicht von 10 kg benötigt man einen Ringmagneten von etwa 100 mm Durchmesser. Die ist gleichzeitig der größte Durchmesser, bei dem handelsübliche Ringmagnete noch aus einem Stück bestehen. Für größere Durchmesser werden die Magnete aus einzelnen Segmenten zusammengesetzt, was zu den bereits erwähnten Nachteilen führt. Die Konzeption nach der Erfindung ermöglicht jedoch den Einsatz von Lagern der erwähnten, einstückigen Ausführung.

Bezugszeichenliste:

1   Vakuumgehäuse
2   Welle
3   unteres Schwungrad
4   oberes Schwungrad
5   Polelement
6   Polelement
7   Stator
8   Wicklungen
9   unteres Axiallager
10  oberes Axiallager
11  unterer Permanentmagnet
12  oberer Permanentmagnet
13  unterer Supraleiter
14  oberer Supraleiter
15  unterer Kryostat
16  oberer Kryostat
17  Außenseite
18  Außenseite
19  Notlager
20  Spalt
21  Hülle
22  Vakuumraum
23  Notlager

**Patentansprüche**

1.  Schwungrad-Energiespeicher mit senkrechter Welle und passiven, supraleitenden magnetischen Axiallagern an dieser, sowie einem Innenläufer Elektromotors/-generator, dessen Rotor mechanisch an das Schwungrad angekoppelt und um den Rotor als Teil der Welle der Stator des Elektromotors/-generators ortsfest zum Vakuumgehäuse des Energiespeichers angeordnet ist, wobei die Wicklungen des Stators in diesem ein rotierendes magnetisches Feld erzeugen, welches auf den Rotor einwirkt und bei welchem den Ringmagneten der Lager auf der dem Schwungrad abgewandten Seite jeweils ein scheibenförmiger Supraleiter mit Abstand gegenüber liegt, der gegenüber dem Gehäuse fest ist,
    **gekennzeichnet durch** die folgenden Merkmale:

    a) der Energiespeicher besteht aus zwei, **durch** eine Homopolarmaschine angetriebenen Schwungrädern, einem unteren (3) und einem oberen (4), die in Abstand zueinander gemeinsam auf der Welle (2) des Rotors (5, 6) der Homopolarmaschine sitzen, wobei dieser auf der Welle (2) zwischen den beiden Schwungrädern (3, 4) innerhalb des Stators (7) angeordnet ist.
    b) auf der Welle (2) sitzen unter dem unteren Schwungrad (3) der Ringmagnet (11) eines ersten, unteren supraleitenden passiven Axiallagers (9) als Drucklager, über dem oberen (3) der Ringmagnet (12) eines zweiten, oberen supraleitenden passiven Axiallagers (10) als Zuglager gegen die Schwerkraft, wobei
    d) der Stator (7) der Homopolarmaschine am Gehäuse (1) angebracht oder als Teil des Gehäuses (1) ausgebildet ist.

2.  Schwungrad-Energiespeicher nach Anspruch 1, **gekennzeichnet durch** die weiteren Merkmale:

    e) der Rotor besteht aus zwei um 90 gegeneinander versetzten Polelementen (5 und 6), die eine geringere Breite als Höhe aufweisen und in bestimmtem Abstand symmetrisch zueinander angeordnet sind.

3.  Schwungrad-Energiespeicher nach einem der vorstehenden Ansprüche, **dadurch gekennzeichnet, daß** das polare Trägheitsmoment $I_{pol}$ und das äquatoriale Trägheitsmoment $I_{äqu}$ der rotierenden Teile um einen Faktor verschieden sind.

4.  Schwungrad-Energiespeicher nach Anspruch 3, **dadurch gekennzeichnet, daß** der Faktor ungefähr zwei ist.

5.  Schwungrad-Energiespeicher nach einem der vorstehenden Ansprüche, **dadurch gekennzeichnet, daß**

$$L >= {}^{1}3 * R$$

    wobei L der Abstand der Massenmittelpunkte der zwei Schwungräder voneinander und R der Radius der Schwungräder ist.

6.  Schwungrad-Energiespeicher nach einem der vorstehenden Ansprüche, **dadurch gekennzeichnet, daß** die beiden Axiallager (9, 10) gleich aufgebaut sind.

7.  Schwungrad-Energiespeicher nach einem der vorstehenden Ansprüche, **dadurch gekennzeichnet, daß** die Welle (2) durch die Schwungräder (3, 4) hindurchgeht.

8.  Schwungrad-Energiespeicher nach einem der vorstehenden Ansprüche, **dadurch gekennzeichnet, daß** die beiden Schwungräder (3, 4) in ihrer Form, ihren Abmessungen und ihrem Gewicht identisch sind.

## Claims

1. Flywheel energy accumulator, having a vertical shaft and passive, superconducting magnetic axial bearings on said shaft, as well as an internal armature-type electric motor/generator, the rotor of which is mechanically coupled to the flywheel, and the stator of the electric motor/generator is disposed around the rotor as part of the shaft in a stationary manner relative to the vacuum housing of the energy accumulator, wherein the windings of the stator generate in said stator a rotating magnetic field which acts on the rotor, and wherein a discshaped superconductor lies opposite each annular magnet of the bearings, with a spacing therebetween, on the side remote from the flywheel, which superconductor is fixed relative to the housing, **characterised by** the following features:

   a) the energy accumulator comprises two flywheels, a lower flywheel (3) and an upper flywheel (4), which are driven by a homopolar machine and sit jointly on the shaft (2) of the rotor (5, 6) of the homopolar machine with spacings therebetween, said rotor being disposed on the shaft (2) between the two flywheels (3, 4) internally of the stator (7);
   b) the annular magnet (11) of a first, lower superconducting, passive axial bearing (9) sits on the shaft (2) below the lower flywheel (3) as a thrust bearing, and the annular magnet (12) of a second, upper, superconducting, passive axial bearing (10) sits above the upper flywheel (3) as a tractive bearing in opposition to the force of gravity;
   c) the stator (7) of the homopolar machine being fitted on the housing (1) or being provided as part of the housing (1).

2. Flywheel energy accumulator according to claim 1, **characterised by** the additional features:

   d) the rotor comprises two pole elements (5, 6), which are offset from each other by 90°, said elements having a width which is smaller than the height and being disposed symmetrically with each other at a predetermined spacing therebetween.

3. Flywheel energy accumulator according to one of the preceding claims, **characterised in that** the po-lar moment of inertia $I_{pol}$ and the equatorial moment of inertia $I_{equ}$ of the rotating component parts differ by a factor of one.

4. Flywheel energy accumulator according to claim 3, **characterised in that** the factor is approximately two.

5. Flywheel energy accumulator according to one of the preceding claims, **characterised in that**

$$L >= {}^{1}3 * R,$$

L being the spacing between the centres of mass of the two flywheels, and R being the radius of the flywheels.

6. Flywheel energy accumulator according to one of the preceding claims, **characterised in that** the two axial bearings (9, 10) have identical structures.

7. Flywheel energy accumulator according to one of the preceding claims, **characterised in that** the shaft (2) extends through the flywheels (3, 4).

8. Flywheel energy accumulator according to one of the preceding claims, **characterised in that** the two flywheels (3, 4) are identical in respect of their shape, their dimensions and their weight.

## Revendications

1. Accumulateur d'énergie à volants d'inertie comportant un arbre vertical muni de paliers axiaux magnétiques supraconducteurs passifs ainsi qu'un moteur électrique/générateur à rotor intérieur, dont le rotor est couplé mécaniquement aux volants d'inertie et le stator du moteur/générateur électrique est installé autour du rotor comme partie de l'arbre, de manière fixe par rapport au boîtier sous vide de l'accumulateur d'énergie, les enroulements du stator générant un champ magnétique rotatif agissant sur le rotor, et dans lequel en regard des aimants annulaires des paliers, du côté opposé à chaque volant d'inertie, un supraconducteur en forme de disque est: situé à une certaine distance, en étant fixe par rapport au boîtier,
   **caractérisé en ce que**

   d) l'accumulateur d'énergie est formé de deux volants entraînés par une machine homopolaire, un volant d'inertie inférieur (3) et un volant d'inertie supérieur (4) installés à distance l'un de l'autre en commun sur l'arbre (2) du rotor (5, 6) de la machine homopolaire, et celle-ci est installée sur l'arbre (2) entre les deux volants d'inertie (3, 4) dans le stator (7),

e) l'arbre (2) porte sous le volant d'inertie inférieur (3), l'aimant annulaire (11) d'un premier palier axial (9) passif, supraconducteur, inférieur fonctionnant comme palier de poussée, et au-dessus du volant supérieur (3), l'aimant annulaire (12) d'un second palier axial (10), passif, supérieur, comme palier de traction pour s'opposer au poids,

f) le stator (7) de la machine homopolaire étant installé dans le boîtier (1) ou faisant partie du boîtier (1).

2. Accumulateur d'énergie à volants d'inertie selon la revendication 1,
   **caractérisé en ce que**

   e) le rotor est formé de deux éléments polaires (5, 6) décalés de 90°, qui ont une largeur plus faible que la hauteur et sont installés de manière symétrique à une certaine distance.

3. Accumulateur d'énergie à volants d'inertie selon l'une quelconque des revendications précédentes,
   **caractérisé en ce que**
   le moment d'inertie polaire $I_{pol}$ est le moment d'inertie équatorial $I_{equ}$ des pièces en rotation diffère d'un facteur.

4. Accumulateur d'énergie à volants d'inertie selon la revendication 3
   **caractérisé en ce que**
   le facteur est environ égal à 2.

5. Accumulateur d'énergie à volants d'inertie selon l'une quelconque des revendications précédentes,
   **caractérisé en ce qu'**
   on a :

$$L >= {}^1 3 * R$$

   L représentant la distance des centres massiques des deux volants d'inertie l'un par rapport à l'autre, et R le rayon des volants massiques.

6. Accumulateur d'énergie à volants d'inertie selon l'une quelconque des revendications précédentes,
   **caractérisé en ce que**
   les deux paliers axiaux (9, 10) sont identiques.

7. Accumulateur d'énergie à volants d'inertie selon l'une quelconque des revendications précédentes,
   **caractérisé en ce que**
   l'arbre (2) traverse les volants d'inertie (3, 4).

8. Accumulateur d'énergie à volants d'inertie selon l'une quelconque des revendications précédentes,
   **caractérisé en ce que**

les deux volants d'inertie (3, 4) sont identiques par leur forme, leur dimension et leur poids.

Fig. 1

Fig. 2